(19) Europäisches Patentamt
European Patent Office
Office européen des brevets

(11) Publication number: **0 050 170**
**B1**

(12) # EUROPEAN PATENT SPECIFICATION

(45) Date of publication of patent specification: **16.04.86**

(51) Int. Cl.⁴: **B 01 J 23/30**, B 01 J 23/24, B 01 J 23/90, C 10 G 11/00

(21) Application number: **80303691.2**

(22) Date of filing: **20.10.80**

(54) **Improved transition metal oxide catalysts and uses thereof.**

(43) Date of publication of application:
**28.04.82 Bulletin 82/17**

(45) Publication of the grant of the patent:
**16.04.86 Bulletin 86/16**

(84) Designated Contracting States:
**BE DE FR GB IT NL**

(56) References cited:
**DE-A-2 201 411**
**DE-B-1 272 899**
**FR-A-2 263 817**
**GB-A-1 457 936**
**GB-A-1 520 726**
**GB-A-1 545 008**
**US-A-2 849 383**
**US-A-4 008 037**
**US-A-4 197 189**

**The file contains technical information submitted after the application was filed and not included in this specification**

(73) Proprietor: **Exxon Research and Engineering Company**
**P.O.Box 390 180 Park Avenue**
**Florham Park New Jersey 07932 (US)**

(72) Inventor: **Grenoble, Dane Clark**
**1209 Central Avenue**
**Plainfield New Jersey (US)**
Inventor: **Jung, Kim Chang**
**41 First Street**
**Somerset New Jersey (US)**
Inventor: **Murrell, Lawrence Lee**
**1229 McDonough Street**
**South Plainfield New Jersey (US)**
Inventor: **Weissman, Walter**
**271 Lorraine Drive**
**Berkeley Heights New Jersey (US)**

(74) Representative: **Field, Roger Norton et al**
**ESSO Engineering (Europe) Ltd. Patents & Licences Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 050 170 B1

**Description**

Cracking of petroleum fractions over acid catalysts represent the most widely used means of molecular weight reduction in refining processes. In a cracking process, in the presence of steam, a potentially effective catalyst in the process is required to have components which retain a high level of acid cracking activity in the presence of steam.

Most of the conventional acid catalysts used in catalytic cracking processes are known to be unsuited for use in the presence of steam at temperatures greater than about 1400°F (760°C). The effects of water are considered to be those of a structural poison and result in a weakening of the acid strength of the acid sites. Stability in high steam environments is desirable however, since one way of removing the coke which is inevitably deposited on the catalyst is to steam gasify the coke on the catalyst. The burning off of the coke necessarily requires the presence of steam.

In cracking processes it is generally the object to generate lower molecular weight, but commercially valuable products, from high molecular weight crude feedstocks. The catalysts used in these acid catalyzed processes, however normally suffer from extreme sensitivity to contaminants in the feedstocks such as sulfur, nitrogen and traces of various metals such as nickel, vanadium, iron, chromium. The catalysts are also susceptible to rapid deactivation by the depositing of coke.

U.S. Patent 3,649,707 teaches a multistep, multicatalyst dealkylation using steam. The first reaction zone utilizes a catalyst composite containing as active ingredients a cobalt component, a nickel component or a Group VIB component, preferably composited with a high surface area refractory inorganic oxide type carrier characterized in having a surface area of at least 50 $m^2/gm$. These carriers include alumina, silica, silica-alumina, zirconia, thoria, magnesia, titania, bauxite, mordenite, faujasite, etc. The cobalt, nickel or Group VIB component can be in the elemental or preferably the oxide form. This catalyst is used in a *first* reaction zone for dealkylating an alkyl aromatic at dealkylation conditions controlled to produce a first reaction zone effluent wherein about 1 to about 20 wt. % preferably about 1 to 10 wt. % of the alkylaromatic passed to said zone is dealkylated. Zone one is run at conditions which include a temperature of about 300°C to about 700°C, a pressure of about atmospheric (101 $kN/m^2$) to about 100 atmospheres ($1.01\times10^4$ $kN/m^2$), a steam to hydrocarbon mole ratio of about 1:1 to about 30 to 1 or more and a liquid hourly hydrocarbon space velocity of about 0.1 to about 20 $hr^{-1}$ or more. The reaction practised in this zone is dealkylation as has been previously stated. Steam dealkylation is a catalyzed reaction wherein water is a consumed reactant. This is to be contrasted with acid at cracking which is associated with acid sites found on the catalyst and which though preferably practised in the presence of steam does not consume the steam that is, water is *not* a reactant.

U.S. 2,849,383 teaches catalysts for use in hydrocarbon conversion processes and the processes themselves, wherein the catalyst consists essentially of a siliceous cracking catalyst such as silica-alumina and an oxide of a metal from Group VB or VIB, V, Nb, Ta, Cr, Mo, W. The siliceous cracking catalyst is described as a synthetic or natural siliceous composition which contains at least 50% silica (calculated as $SiO_2$). The siliceous material can be silica-alumina, silica-magnesia, silica-zirconia and silica-alumina-zirconia. The metal oxide (from Groups VB or VIB) must be incorporated within the cracking catalyst in a quantity of at least 2.9% by weight. The material can be deposited on the carrier or coprecipitated with the siliceous carrier. It is further stated that an essential step in the preparation of the catalyst composition is the steaming of the composition after calcination for from 1 to 8 hours at temperatures of from 600°C to 800°C in 100% steam. While this reference recites the above process in general, there are examples in the specification only of chromia on silica-alumina. The fact that this steaming is effective only for certain combinations of materials when the support is alumina was not recognized by the art.

In hydrocarbon conversion processes such as those wherein petroleum fractions are cracked over acid catalysts, it has been discovered that remarkable improvements in the realms of selectivity and % conversion are obtained by running such conversion processes (e.g. gas oil catalytic cracking, heavy ends cat cracking, etc.) in the presence of catalysts comprising a catalytic metal oxide component, wherein said catalytic metal oxide is either an oxide of tungsten, niobium or a mixture thereof, or a tungsten or niobium oxide in combination with one or more additional metal oxides selected from tantalum oxide, hafnium oxide, chromium oxide, titanium oxide and zirconium oxide. The oxide is preferably an oxide of tungsten, niobium or a mixture thereof, most preferably, an oxide of tungsten or niobium. The oxide is supported on certain refractory metal oxide supports which are not themselves acid cracking catalyst under normally employed conditions, preferably, alumina, zirconia, boria, thoria, magnesia, zirconium titanate, titania, chromia, silica, kieselguhr and mixtures thereof, preferably the aluminas, i.e., η-alumina, γ-alumina, α-alumina said catalyst being steamed at elevated temperatures prior to use.

In one embodiment, the support is one which is not in itself an acid cracking catalyst under normally employed conditions. In another embodiment, the support may be itself a silica-containing acid cracking catalyst, provided that the support contains less than 50 wt. % silica calculated as $SiO_2$. These catalysts are prepared by techniques known in the art, e.g. incipient wetness impregnation techniques, etc. Metal oxide precursors, for example, ammonium meta-tungstate, are deposited on the selected refractory oxide support followed by the conversion into the oxide form and calcination. Before use the metal/support combination is subjected to steaming. For certain transition metal oxide concentrations the steaming treatment significantly improves the catalytic cracking activity. These catalysts demonstrate resistance to

deactivation and maintain high conversion and selectivity activities. They also resist poisoning by sulfur and nitrogen and are relatively uneffected by techniques utilized to remove coke deposits.

Further, these catalysts may be regenerated in a manner so as to simultaneously gasify coke and produce a low BTU fuel gas from the coke.

The catalysts of the present invention are prepared by impregnating the desired high surface area refractory oxide with a solution of a precursor of the desired metal oxide. The solution used in impregnating the refractory oxide support may be aqueous or organic, the only requirement being that an adequate amount of precursor compound for the selected metal oxide is soluble in the solvent used in preparing the impregnating solution. Aqueous or alcohol solutions, preferably aqueous or ethanol solutions are normally used for convenience. The following is a non-exhaustive exemplary recitation of metal salts which may be used in preparing the desired compositions.

Salts of the transition metals which were employed in the catalyst preparations were those which were soluble in, without reaction with, either aqueous or nonaqueous solutions. For the aqueous preparation salts such as ammonium meta-tungstate and chromium trioxide were employed. For the nonaqueous preparation salts such as $TiCl_4$, $ZrCl_4$, $HfCl_4$, $CrO_2Cl_2$, $WCl_6$, $Nb_2(OC_2H_5)_{10}$, $Ta_2(OC_2H_5)_{10}$, $W(CO)_6$. Additional salts which can be used are the soluble bromides, iodides and oxychlorides. Also organo-metallic metal catalyst precursor salts such as the cyclic polyolefin carbonyl complexes, or the like, may be employed, i.e., $C_8H_8M(CO)_3$, M=Cr, W. Also arene-metal complexes such as $(C_6H_6)_2Cr$ may be employed. Pseudohalide salts such as $Cr(CNC_6H_5)_5$ may also be used. Acetates and acetylacetonate metal salts can also be employed. Soluble sulfide complexes such as $C_4H_{10}S_2W(CO)_4$ can also be employed. Amine-substituted complexes such as $(pyridine)_3$-$W(CO)_3$ can also be employed.

The refractory oxide support should have a high surface area in the region of about 10 to 500 $m^2/g$, preferably 20 to 200 $m^2/g$, most preferably over 100 $m^2/g$ prior to the deposition of the metal oxide salt precursor. These surface areas are as measured by the Brunauer-Emmett-Teller (BET) method.

The catalyst may also be prepared by conventional coprecipitation techniques, in which case, the metal salt or salts are comingled in solution with a soluble salt precursor of the support. Simultaneous precipitation may be induced by pH changes, the catalyst filtered, dried and calcined in air to convert the metal precursor salt and support precursor salts into oxides.

When using the impregnation technique the impregnating solution is contacted with the refractory oxide support for a time sufficient to deposit the precursor material onto the carrier either by selective adsorption or alternatively, the excess solvent may be evaporated during drying leaving behind the precursor salt. Advantageously, the incipient wetness techniques may be used whereby just enough of a precursor salt solution is added to dampen and fill the pores of the high surface area powder of the above-recited refractory oxide support material.

The composite thus prepared by any of the above-recited techniques, or any other known in the art is dried at a temperature of from 50 to 300°C to remove the excess solvent and then converted into the oxide form by exposure at temperatures of from 150 to 800°C, preferably 300—700°C in an atmosphere such as $O_2$, Air, He, Ar, Ne and combinations thereof. Reducing atmospheres may also be used but require subsequent calcination to convert the reduced metal component to the oxide form. This exposure is for a time sufficient to convert essentially all of the metal salt precursor into metal oxide. The calcination is useful to decompose the metal salt precursor to the oxide form. Calcination, however, may not be required for certain metal precursor salts which readily convert into metal oxides.

These metal oxide/carrier composites are subjected to high temperature steaming prior to use for periods of from .1 to 60 hours, preferably 1 to 16 hours, at temperatures ranging from 600 to 1200°C, preferably 800°C—1200°C and preferably in from 0.1 to 100% steam, the balance of the atmosphere being inert gases ($O_2$, Air, Ar, Ne, He, $N_2$ and mixtures thereof).

These catalysts have been found to be effective in hydrocarbon conversion processes, such as gas oil cat cracking, resid cat cracking, heavy ends cat cracking, acid hydrocracking, etc. wherein the hydrocarbonaceous feed to be converted is contacted with the catalysts under conditions sufficient to effect the desired conversion in the presence of water. Typical hydrocarbonaceous feedstreams which are catalytically converted comprise mixed hydrocarbons boiling within the range of from 400 to 1200°C.

By way of example, two typical gas oils used as feeds for cat cracking are:

TABLE I
ERDL cat cracking pilot plant feeds inspections

| Feed symbol | ETLGO | CM |
|---|---|---|
| Gravity, °API | 33.3 | 28.4 |
| Aniline Point, °F (°C) | 192 (89) | 171 (77) |
| Br. No., g Br/100 gr | * | 6.5 |
| Ref. Index, $N_D$@67°C | 1.477 | 1.4735 |
| Pour Point, °F (°C) | * | 65 (18) |
| Sulfur, Wt. % | 0.20 | 0.78 |
| Nitrogen, wppm | * | 447 |
| ASTM D-1160 distillation | | |
| 5% @ °F (°C) | 546 (286) | 502 (261) |
| 10% @ °F (°C) | 552 (289) | 538 (281) |
| 50% @ °F (°C) | 592 (311) | 693 (367) |
| 90% @ °F (°C) | 653 (345) | 888 (475) |
| 95% @ °F (°C) | 664 (350) | 928 (498) |
| FBP | 678 (357) | 978 (525) |

* Not available.

Typical catalytic conversion process parameters include temperatures ranging from 300 to 900°C, preferably 400 to 600°C, pressures ranging from 0 to 10,000 psig ($10^2$ to $6.9\times10^4$ kN/m$^2$) preferably 50—500 psig ($4.44\times10^2$—$3.55\times10^3$ kN/m$^2$). Contact time can range from less than 1 sec. to as high as 2000 secs., preferably 1 sec. to 120 secs., at from .1 to 50 Weight Feed/Hr/Weight Catalyst (WHW), preferably 1—4 WHW. Optionally, $H_2O$ as steam may be added along with the hydrocarbon feedstream. When this is done, the $H_2O$/hydrocarbon mole ratio ranges from .5:1 to 20:1, preferably 1:1 to 10:1.

The catalysts employed preferably have metal oxide loadings of from 0.5 to 25 wt. % metal oxide based on total catalyst composition, preferably 2—10 wt. %, more preferably 4—6 wt. % metal oxide based on total catalyst composition.

When using the mixed oxide systems of tungsten oxide or niobium oxide in combination with one or more of tantalum oxide, chromium oxide, titanium oxide, zirconium oxide and hafnium oxide (which additional oxides are used to supply support surface area maintenance as discussed in greater detail below) the ratio of tungsten or niobium oxide to the additional metal oxide is in the order of 1:1, preferably 3:1, most preferably 9:1.

The catalysts described as useful in the above-recited processes may also advantageously contain traces of various promoter materials selected from the group consisting of barium oxides, calcium oxides, magnesium oxides. These materials in the form of precursor salts can be incorporated into the carrier simultaneously with the metal precursor salt of sequentially (the order of addition being merely a matter of choice) or may be coprecipitated with the metal precursor salts and carrier precursor salts. Alternatively, they may be added subsequent to the formation of the catalyst composite.

If used at all these promoters are present at from 0.01 to 4.0 wt. % promotor based on total catalyst composition wherein the amount of promoter metal oxide ranges from .1% to 4.0%, preferably, .1% to 5% of the catalytic metal oxide content.

Alumina surface area maintenance

Numerous transition metal oxides appear to stabilize substantially the surface area and hence the acidity of the $MO_x$—$Al_2O_3$ (M=Group IVa, Va, VIa transition metal) system by stabilizing the surface area of the alumina. The transition metal oxides which exert the strongest surface area maintenance effect on alumina are the oxides of chromium, titanium, zirconium, niobium, hafnium and tantalum, preferably $Cr_2O_3$, $TiO_2$, $ZrO_2$, $Nb_2O_5$, $HfO_2$ and $Ta_2O_5$. The amount of such oxides present may range from 1—8 wt. %

metal oxide based on total catalyst composition, preferably 2—6 wt. % the BET surface areas being of the order of 110 to 135 $m^2/g$. Following steaming at 900°C in air for 16 hours, the BET surface area of 3.6 wt. % $TiO_2$ on $Al_2O_3$ was 117 $m^2/g$; of 5.6 wt. % $ZrO_2$ on $Al_2O_3$ was 133 $m^2/g$; of $Nb_2O_5$ on $Al_2O_3$ was 110 $m^2/g$; of $Ta_2O_5$ on $Al_2O_3$ was 130 $m^2/g$. The $Al_2O_3$ used had an original BET surface area of 190 $m^2/g$.

The presence of selected Group IVa, Va and VIa metal oxides on the support also dramatically reduces the amount of coke which deposits on the system. This reduced coke make coupled with support surface area maintenance results in a catalyst possessing superior activity and conversion characteristics.

When the catalyst is used to hydroconvert heavy hydrocarbon feedstocks such as resids or synthetic feeds derived from Cold Lake crude, tar sands, coal liquids, shale oil, etc. which have large coke makes, the coked catalyst can be reactivated and at the same time a low BTU gas can be produced from the coke by a process comprising the steps of:

(a) removing the coked catalyst from the hydrocarbon conversion zone;

(b) regenerating the coked catalyst by contacting same with steam, oxygen-containing gas or mixture thereof at elevated temperature to produce a regenerated catalyst and an $H_2$ rich gas, a low BTU gas rich in CO and a combination thereof; and

(c) recirculating the regenerated catalyst of step (b) to the hydrocarbon conversion zone of step (a).

In the case where partial combustion is employed, small amounts of steam might be added along with the air to absorb a portion of the exothermic heat of reaction. In the case where steam gasification is employed a means for providing the endothermic heat for this gasification must be provided. This can be accomplished by adding oxygen along with the steam or by circulating hot catalyst solids from a third vessel where a portion of the coke on the catalyst is combusted with air.

The hot regenerated catalyst can be recirculated to the reactor, the sensible heat released as these solids cool to the reactor site temperature providing the endothermic heat of cracking. In general, the process is identical to current cat cracking processes with the exception of an option to include steam in the reactor as a catalyst promoter and the operation of the regenerator to produce a gas from the coke having a significant heating value (i.e. >100 BTU/SCF). (>3.7 $J/cm^3$).

To regenerate the catalyst, the typical conditions employed in the regenerator comprise a pressure not greater than 150 psig. ($1.13\times10^3$ $kN/m^2$), preferably not greater than 60 psig. ($4.14\times10^2$ $kN/m^2$), more preferably not greater than about 45 psig. ($3.1\times10^2$ $kN/m^2$). The temperature is maintained at a level in the range of about 1400—2800°F (760—1535°C), preferably at a temperature greater than about 1500°F (816°C), more preferably at a temperature in the range of about 1600 (871°C) to 1900°F (927°C), most preferably at a temperature in the range of about 1700 (938°C) to 1800°F (982°C). The coked catalyst is treated under the above conditions in the regenerator in the presence of steam and an oxygen containing gas to produce a hot gaseous stream containing $H_2$ and CO. The conversion of coke into CO and $H_2$ proceeds by the following scheme:

$$(n+1)C+(0.5+n)O_2 \rightarrow CO+nCO_2 \qquad (1)$$

$$CO+O_{2/2} \rightarrow CO_2 \qquad (2)$$

$$CO_2+C \rightleftharpoons 2CO \qquad (3)$$

$$H_2O+C \rightleftharpoons H_2+CO \qquad (4)$$

$$H_2O+CO \rightleftharpoons CO_2+H_2 \qquad (5)$$

When coke is oxidized, the initial product is a mixture of CO and $CO_2$ (as shown in equation (1). At temperatures of 1600°F+ (871°C+) in the presence of oxygen CO is rapidly oxidized to $CO_2$ according to equation (2). After oxygen has been exhausted, $CO_2$ reacts with carbon to form CO. At high temperatures, equilibrium favors drawing equation (3) to the right to form CO. Low pressure also favors this reaction. Reaction (3) is slower than reaction (2). Thus, equilibrium would favor very high $CO/CO_2$ ratios at conditions of 1700°F—1750°F+ (938°—954°C+) and pressures of 2.7 atm ($2.73\times10^2$ $kN/m^2$) or lower in the gasifier.

Steam will also gasify coke as represented by equation (4). This reaction is slightly endothermic and when steam is substituted for some of the oxygen, the gasification zone temperature drops at a constant quantity of coke gasified. Finally, water reacts with CO to produce $CO_2$ and hydrogen in the water gas shift represented by equation (5). Most of the sulfur in the coke will be converted to $H_2S$ with a very small amount of COS being formed.

In order to obtain significant conversion of coke to low BTU gas, it is necessary to gasify at temperatures in the range of 1600—1800°F. (871°C—928°C). These high temperatures in the presence of the steam normally contained in a regenerator place severe requirements on the stability of cracking catalysts. In order for this type of process to be practical, catalyst systems must demonstrate the ability to withstand these severe conditions. To this end the activity of a variety of $WO_3/Al_2O_3$ catalyst and some conventional catalysts before and after steaming treatments at 1600°F (871°C) have been compared.

Experimental

The process unit used for conducting the following experiments was a typical downflow gas phase

reactor (40 $cm^3$ capacity) capable of operation at temperatures as high as 550°C and pressures as high as 500 psig ($3.55 \times 10^3$ kN/$m^2$). Liquid oil feed to the unit is by a dual-barrel Ruska pump. Water is fed to the reactor by a Lapp pump. Gas feeds are controlled by Research Control valves coupled to a Foxboro Flow Controller (Foxboro is a registered Trade Mark in the United Kingdom). The reactor is heated by a fluidized sandbath. Typical operating conditions have been 510°C (950°F) and 30 psig ($3.06 \times 10^2$ kN/$m^2$). Liquid weight hourly space velocities have been varied from about 1.4 $hr^{-1}$ to 5.6 $hr^{-1}$ for both oil and water. The oil feed used is an East Texas Light Gas Oil (ETLGO) with the properties given in Tables I and II.

The principal objective of the initial experiments has been the determination of the stability of the $WO_3$ system compared to standard systems (zeolites and silica-aluminas) after steaming at 1600°F (870°C) for 16 hours. The catalyst steamings were carried out in an upflow 3-zone furnace operated at ambient pressure with a gas feed consisting of 90% steam and 10% inert gas. The water was fed to the system by a Milton-Roy mini-pump at the rate of about 35 $cm^3$ liq. per hour. The temperature in the central zone was held at about 870°C (1600°F).

The $WO_3/Al_2O_3$ catalysts used in this study were prepared by incipient wetness techniques using aqueous solutions of ammonium meta-tungstate. The alumina used was reforming grade $\gamma$-$Al_2O_3$ (BET surface area ~180 $m^2$/g) extrudate form. The silica-alumina catalysts were either obtained from Davison Chemical Division; or a silica-alumina catalyst obtained from Exxon Research Development Labs either calcined at 1000°F (538°C) or steamed at 1400°F (760°C) for 16 hrs. The zeolite catalysts studied were either calcined at 1000°F (538°C) or steamed at 1400°F (760°C) for 16 hrs. The silica-alumina and zeolites were mixed with about 25% Degussa Alumina (BET surface area 100 $m^2$/g) as a binder and pilled prior to activity measurements. (Degussa is a registered Trade Mark in the United Kingdom).

TABLE II
G.C. Distillation of ETLGO feed

| Pct. off | °F | °C |
|---|---|---|
| 0 | 421 | 216 |
| 1 | 442 | 228 |
| 5 | 491 | 255 |
| 10 | 520 | 271 |
| 25 | 559 | 293 |
| 50 | 605 | 318 |
| 75 | 656 | 347 |
| 90 | 695 | 368 |
| 95 | 713 | 378 |
| 99 | 761 | 405 |
| 100 | 850 | 454 |

Figure 1 shows the effect of steaming on the activity of a 10% $WO_3/Al_2O_3$ catalyst compared to a conventional silica-alumina catalyst and to the pure alumina substrate. The activity is defined as the amount of $430^-$°F ($221°C^-$) liquid material produced per hour per gram of total catalyst. Note that this represents the activity of the various catalysts to produce a gasoline-type liquid. It is seen from Figure 1 that the $WO_3$ catalyst is markedly different from the conventional silica-alumina catalyst with regard to its stability towards severe steaming. The silica-alumina catalyst loses a substantial fraction of its activity whereas the $WO_3/Al_2O_3$ catalyst loses almost none of its activity. The alumina base used in the preparation of the $WO_3$ catalyst has a low fresh (unsteamed) activity and loses virtually all its activity after steaming.

Figure 2 depicts the effect of steaming on the acid site strength and distribution for the $WO_3/Al_2O_3$ and $SiO_2Al_2O_3$ cats. Again it is seen that there is substantial difference between the $WO_3/Al_2O_3$ catalyst and the silica-alumina catalyst. For the $WO_3/Al_2O_3$ catalyst there are still a significant number of very strong (−8.2 on a Hammett Acidity Scale) sites which are the sites believed to be primarily responsible for cat cracking reactions. On the other hand, the silica-alumina catalyst loses all of its strong acid (−8.2) sites. It is clear that steaming has caused a major change in the surface morphology of the silica-alumina catalyst resulting in the complete destruction of surface sites having strong acid character. The $WO_3/Al_2O_3$ catalyst is apparently not similarly affected thereby indicating a substantial difference in the nature of the strong acid sites on the

two catalysts. During steaming the surface area of the $WO_3/Al_2O_3$ catalyst drops from about 180 $m^2/g$ to about 60—70 $m^2/g$. The silica-alumina catalyst drops in surface area from 350 $m^2/g$ to about 40 $m^2/g$. The activity maintenance and the constancy of the number and strength of acid sites on the $WO_3/Al_2O_3$ system indicate that the $WO_3$ or $WO_3$—$Al_2O_3$ sites remain unchanged after steaming in spite of the large loss in surface area of the catalyst. The collapse of surface area for silica-alumina apparently results in a complete destruction of the active catalytic sites.

In summary, the loss in active sites ($\leq -8.2$ Ho Acidity) for the steamed $WO_3$ on $Al_2O_3$ catalyst, Figure 2, shows that although significant surface area decrease occurs that a third of the strong acid sites are preserved. These strong acid sites which are maintained following steaming treatment, despite being reduced in number of sites per gram of catalyst, are clearly capable of giving nearly fresh catalyst activity, Figure 1. This is one of the principal discoveries of the catalysts of the present invention and constitute a major advancement over state of the art catalysts.

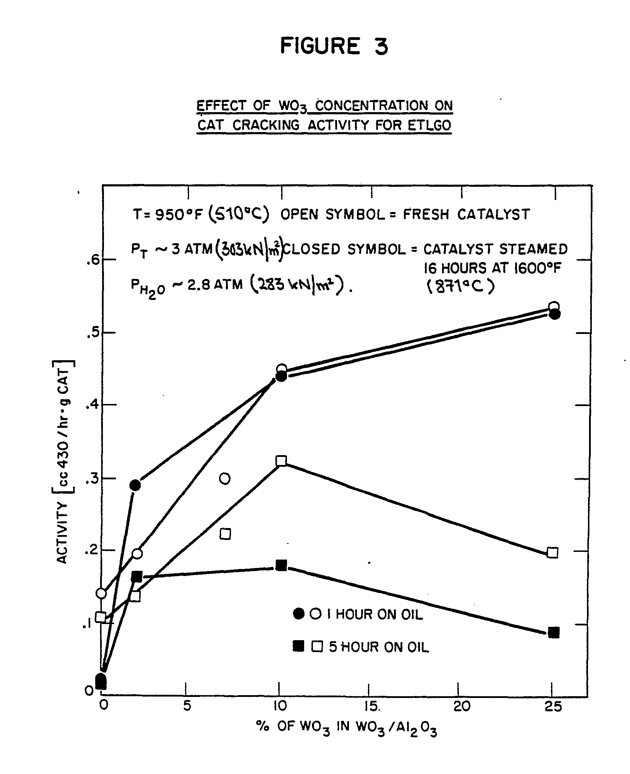

Figure 3 shows the effect of $WO_3$ concentration on the activity at 1 hour and 5 hours on oil for the $WO_3/Al_2O_3$ catalyst system before and after steaming at 1600°F (871°C) for 16 hours. It is clear that increasing $WO_3$ concentration increases conversion at one hour on oil for the fresh catalysts. The difference in activity for fresh catalysts at one hour on oil compared to five hours on oil increases with increasing $WO_3$ concentration, eventually becoming quite large for the 25% $WO_3/Al_2O_3$ catalyst. After steaming similar effects occur but important differences emerge. At the 2% $WO_3$ level steaming actually increases activity. At the 10% and 25% loading levels steaming does not substantially alter activity. The activity maintenance indicates that the $WO_3$ remains completely accessible for catalysis. It should be added that under identical reaction conditions to those used in the above discussed experiments a zeolite catalyst steamed at somewhat less severe conditions than either the $WO_3/Al_2O_3$ or silica-alumina catalysts lost substantial activity after steaming. The activity at one hour on oil as defined in Figure 1 dropped from 0.74 to 0.24. This again illustrates the inherent system stability of the $WO_3/Al_2O_3$ system relative to conventional catalyst systems.

The following are a series of examples directed to the catalytic use of the disclosed metal oxides on supports and are presented so as to demonstrate the general applicability of the process of this invention with the disclosed catalysts.

The reaction investigated was gas oil cracking to break C—C bonds in the presence of a large excess of steam. The cracking reaction produces a liquid gasoline fraction referred to as the $C_5$—430°$F^-$ (221°$C^-$) fraction or cut. The amount of this gasoline fraction is referred in the below tables as the conversion. The conversion was measured after a 0.5 and a 1 hr. interval. The competing side reactions which are undesirable are gasification and coking. Both side reactions are important in catalytic-cracking because they directly affect the gasoline yields. All the catalysts in the tables below were evaluated at a relatively high space velocity in order to minimize catalyst deactivation by coking. All reactions were for a 12.5 g catalyst charge with an oil flow rate of 80 $cm^3/hr$.

In the following examples a series of the disclosed metal oxides supported on alumina are compared for catalytic activity. The activity measurements were obtained in a typical downflow gas phase reactor having a total catalyst capacity of 40 $cm^3$. Liquid oil is fed to the reactor by a dual barrel Ruska pump. Water is fed simultaneously to the oil by a Lapp pump. The reactor is maintained at reaction temperature by immersion in a heated fluidized sandbath. Operating conditions are as follows: Oil Feed: East Texas Light Gas Oil,

Boiling Range 450—700°F (232—371°C)
Catalyst Temp: 510°C
Pressure: 30 PSIG° (306 $kN/m^2$)
$(WHSV)^+$ Oil: 5.6
$H_2O$:Oil Molar Ratio: 10
$^+$Weight hourly space velocity.

Activities are expressed as the amount of oil feed converted to liquid product boiling below 430°F (221°C), i.e. this is referred to as $430^-$°F (221°$C^-$) product. The activity is thus defined by the following expression:

$$\text{Activity}=\text{Conversion to } 430^{-}\text{°F } (221\text{°C}^{-}) \text{ Liquid} \times \text{Flow Rate of Oil} \times (\text{Cat Weight})^{-1}$$

Prior to activity measurement, the catalyst was brought to reaction temperature and water added for 1/2 hour prior to addition of oil feed. This is necessary to prevent premature coking of the catalyst surface.

The thermal stability of the catalyst described in the current invention were determined by subjecting the various catalysts to a high temperature calcination in moist air. The conditions used to determine stability were air calcination at 900°C with air sparged through a water saturator. The steaming treatment was carried out at ambient pressure.

Example 1 (Comparative)

An alumina of high purity (reforming grade, Englehard Industries) was evaluated for acid cat cracking activity under the conditions described previously after a one-half hour period and a one hour period on oil.

The $Al_2O_3$ catalyst had an activity of 0.005 and 0.01 $cm^3$, $430^{-}$°F (221°C$^{-}$) liquid produced/hour/g catalyst, respectively. The total gas production after one hour was 0.4 liter. The coke on catalyst was 1.6 and 0.7 wt. % for the top and the bottom of the catalyst bed, respectively. This example is for comparison with other catalysts of the present invention. See Table III A.

Example 2 (Comparative)

A 3.6 wt. % $TiO_2$ on $Al_2O_3$ catalyst (containing 450 µm/g of Ti) was prepared using a methanol solution of $TiCl_4$ sufficient to fill the pore volume of the alumina described in Example 1. Following drying of the catalyst under vacuum to remove methanol the catalyst was dried at 110°C overnight. The catalyst was then calcined at 500°C overnight in a muffle furnace. The cat cracking activity was obtained as described previously. The 3.6% $TiO_2$ on $Al_2O_3$ catalyst had an activity of 0.04 and 0.03 $cm^3$ $430^{-}$°F ($221^{-}$°C) liquid produced/hour/g catalyst following a one-half hour and a one hour period on oil, respectively. The total gas produced after one hour was 0.6 l. The coke on catalyst was 0.9 and 0.3 wt. % for the top and the bottom of the catalyst bed, respectively.

This example serves to demonstrate the minor improvement in the cat cracking activity realized for a $TiO_2$ on $Al_2O_3$ catalyst compared with $Al_2O_3$ of Example 1. See Table III A.

Example 3 (Comparative)

A 5.6 wt. % $ZrO_2$ on $Al_2O_3$ catalyst (containing 450 µm/g of Zr) was prepared using a methanol solution of $ZrCl_4$ sufficient to fill the pore volume of the alumina described in Example 1. The catalyst was then treated as described in Example 2. The cat cracking activity was obtained as described previously. The 5.6% $ZrO_2$ on $Al_2O_3$ catalyst had an activity of 0.03 $cm^3$ $430^{-}$°F (221°C$^{-}$) liquid product/hour/g catalyst for both a one-half hour period and a one hour period on oil. The total gas production after one hour was 0.5 l. The coke on catalyst was 0.9 and 0.3 wt. % for the top and bottom of the catalyst bed, respectively.

This example again serves to demonstrate the minor improvement in the cat cracking activity realized for this catalyst compared with $Al_2O_3$ of Example 1 and very similar activity to the $TiO_2$ on $Al_2O_3$ catalyst of Example 2. See Table III B.

Example 4 (Comparative)

A 9.5 wt. % $HfO_2$ on $Al_2O_3$ catalyst (containing 450 µm/g of Hf) was prepared using a methanol solution of $HfCl_4$ sufficient to fill the pore volume of the alumina described in Example 1. The catalyst was then treated as described in Example 2. The cat cracking activity was obtained as described previously. The 9.5% $HfO_2$ on $Al_2O_3$ catalyst had an activity of 0.01 and 0.02 $cm^3$ $430^{-}$°F ($221^{-}$°C) liquid product/hour/g catalyst following a one-half hour and an one hour period on oil, respectively. The total gas produced after one hour was 0.2 l. The coke on catalyst was 0.8 and 0.5 wt. % for the top and the bottom of the catalyst bed, respectively.

This example again serves to demonstrate the minor improvement in the cat cracking activity realized for this catalyst compared with $Al_2O_3$; See Table III C.

Example 5 (Comparative)

A 4.0 wt. % $V_2O_5$ on $Al_2O_3$ catalyst (containing 450 µm/g of V) was prepared using a methanol solution of $VOCl_3$ sufficient to fill the pore volume of the alumina described in Example 1. The catalyst was then treated as described in Example 2. The cat cracking activity was obtained as described previously. The 4.0% $V_2O_5$ on $Al_2O_3$ catalyst had an activity of 0.23 and 0.12 $cm^3$ $430^{-}$°F (221°C$^{-}$) liquid product/hour/g catalyst for both a one-half and a one hour period on oil. The total gas produced after one hour was 0.7 l. The coke on the catalyst was 2.1 and 1.6 wt. % for the top and bottom of the catalyst bed, respectively.

This example serves to demonstrate the major improvement in the cat cracking activity realized for this catalyst compared to the previous catalysts, Examples 1, 2, 3 and 4. This example also demonstrates that the activity realized is not associated with large coke deposits on the catalyst, e.g. 2.1 for this example compared to 1.6 of Example 1, respectively. Also, this example further demonstrates that the high activity of the catalyst of this example is realized with very similar gas production compared to the relatively inactive catalysts of the previous Examples 1, 2, 3 and 4; see Table III A.

Example 6 (Comparative)

A 6.0 wt. % $Nb_2O_5$ on $Al_2O_3$ catalyst (containing 450 µm/g of Nb) was prepared using a hexane solution of $Nb(OC_2H_5)_5$ sufficient to fill the pore volume of the alumina described in Example 1. The catalyst was then treated as described in Example 2. The cat cracking activity was obtained as described previously. The 6.0% $Nb_2O_5$ on $Al_2O_3$ catalyst had an activity of 0.59 and 0.45 $cm^3$ $430^{-}$°F ($221^{-}$°C) liquid product/hour/g catalyst for both a one-half hour and a one hour period on oil, respectively. The total gas produced after one hour was 0.8 l. The coke on the catalyst was 1.5 wt. % for both the top and the bottom of the catalyst bed.

This example serves to demonstrate the major improvement in the cat cracking activity realized for this catalyst compared with the catalysts of Example 1, 2, 3 and 4. This example does indicate that the high activity obtained for this catalyst is about 2.5 times the activity obtained for $V_2O_5$ on $Al_2O_3$, Example 5. This example also demonstrates that the activity realized is not associated with large coke deposits on the catalyst e.g. 1.5 compared with 1.6 for this example compared with Example 1, respectively. Also, this

example further demonstrates that the high activity of the catalyst of this example is realized with very similar gas production compared with the relatively inactive catalysts of the previous Examples 1, 2, 3 and 4. See Table III B.

Example 7

Another portion of the catalyst described in Example 6 was charged to a quartz tube, 1" (25.4 mm) in diameter, and placed in a tube furnace. The catalyst was steamed at 900°C (1660°F) with 20% $O_2$ in He sparged through water for 16 hours. The cat cracking activity was obtained as described previously. The steam treated 6% $Nb_2O_5$ on $Al_2O_3$ catalyst had an activity of 0.47 and 0.24 $cm^3$ $430^-$°F (221°$C^-$) liquid product/hour/g catalyst for a one-half hour and a one hour period on oil, respectively. The total gas produced after one hour was 1.0 l. The coke on the catalyst was 2.5 and 2.3 wt. % for the top and the bottom of the catalyst bed, respectively.

This example serves to demonstrate the major improvement in the cat cracking activity realized for this catalyst compared with the previous catalysts, Examples 1, 2, 3 and 4. This example also demonstrates that the activity realized is not associated with large coke deposits on the catalyst, e.g. 2.5 for this example compared with 1.6 for Example 1, respectively. Most importantly this example demonstrates that high cat cracking activity is maintained even after severe steam treatment of the catalyst. Also, this example further demonstrates that the high activity of the catalyst of this example is realized with very similar gas production compared to the relatively inactive catalysts of the previous Examples 1, 2, 3 and 4. This example serves to demonstrate one of the most important results for the transition metal oxide acid catalysts of the present invention, i.e. high temperature steam stability; see Table III B.

Example 8 (Comparative)

A 10.0 wt. % $Ta_2O_5$ on $Al_2O_3$ catalyst (containing 450 µm/g of Ta) was prepared using a heptane solution of $Ta(OC_2H_5)_5$ sufficient to fill the pore volume of the alumina described in Example 1. The catalyst was then treated as described in Example 2. The cat cracking activity was obtained as described previously. The 10.0% $Ta_2O_5$ on $Al_2O_3$ catalyst had an activity of 0.10 and 0.06 $cm^3$ $430^-$°F (221°$C^-$) liquid product/hour/g catalyst for a one-half hour and a one hour period on oil, respectively. The total gas produced after one hour was 0.4 l. The coke on the catalyst was 1.0 and 1.1 wt. % for the top and the bottom of the catalyst bed, respectively.

This example serves to demonstrate that the cat cracking activity of a transition metal oxide supported on alumina is quite dependent on the transition metal ion chosen. Both $V_2O_5$ and $Nb_2O_5$, Examples 5 and 6, respectively are more active than the $Ta_2O_5$ catalyst of this example despite the fact that the transition metal concentration of all three catalysts was identical, i.e. 450 µm/g catalyst. This example, however, does serve to demonstrate higher cat cracking activity of the catalyst of this example compared with the previous catalysts of Examples 1, 2, 3 and 4. The Group VB metal oxides supported on alumina all exhibit greater cat cracking activity than the analogous Group IVB metal oxides supported on alumina. The most active Group VB oxide being niobium oxide, Example 6; see Table III C.

Example 9 (Comparative)

Because of the good cat cracking maintenance of the $Nb_2O_5$ on $Al_2O_3$ catalyst following severe steaming conditions, Example 7, another portion of the $Ta_2O_5$ alumina catalyst was treated under the conditions described in Example 7. The steam-treated 10% $Ta_2O_5$ on $Al_2O_3$ catalyst had an activity of 0.04 and 0.05 $cm^3$ $430^-$°F (221°$C^-$) liquid product/hour/g catalyst for a one-half hour and a one hour period on oil, respectively. The total gas produced after one hour was 1.7 l. The coke on the catalyst was 6.1 and 8.4 wt. % for the top and the bottom of the catalyst bed, respectively.

This example demonstrates that a $Ta_2O_5$ on $Al_2O_3$ catalyst is not able to maintain cat cracking activity for high temperature steaming conditions unlike that observed for a $Nb_2O_5$ on $Al_2O_3$ catalyst, Example 7. This example also demonstrates a major problem with coke production for this steamed catalyst compared with the catalyst of Example 7; see Table III C.

Example 10 (Comparative)

Because of the wide usage of $Cr_2O_3$ on $Al_2O_3$ catalysts in heterogeneous catalysis, two different preparations were investigated. Both an aqueous and a non-aqueous preparation was made for comparison. A 4.5 wt. % $Cr_2O_3$ on $Al_2O_3$ catalyst (containing 450 µm/g of Cr) was prepared using an aqueous solution of chromic acid sufficient to fill the pore volume of the alumina described in Example 1. This catalyst will be referred to as Catalyst A. Another 4.5 wt. % $Cr_2O_3$ catalyst was prepared using a methanol solution of $CrO_2Cl_2$ sufficient to fill the pore volume of the alumina described in Example 1. This catalyst will be referred to as Catalyst B. Catalysts A and B were both treated as described in Example 2. The cat cracking activity was obtained as described previously. Catalyst A had an activity of 0.06 and 0.03 $cm^3$ of $430^-$°F (221°$C^-$) liquid product/hour/g catalyst for a one-half hour and a one hour period on oil, respectively. The total gas produced after one hour was 0.7 l. The coke on the catalyst was 3.4 and 1.9 wt. % for the top and the bottom of the catalyst bed, respectively.

Catalyst B had an activity of 0.01 and 0.05 $cm^3$ $430^-$°F (221°$C^-$) liquid/product/hour/g catalyst for a one-half hour and a one hour period on oil, respectively. The total gas produced after one hour was 0.7 l.

The coke on the catalyst was 2.0 and 1.7 for the top and the bottom of the catalyst bed, respectively.

This example serves to demonstrate the rather low cat cracking activity for both Catalyst A and B of this example. The superior activity of Catalyst A results in a higher coke make than for Catalyst B. This example further serves to demonstrate that the cat cracking activity of a transition metal oxide supported on alumina is quite dependent on the transition metal ion chosen; see Table III A.

Example 11 (Comparative)

A 6.9 wt. % $MoO_3$ on $Al_2O_3$ catalyst (containing 450 μm/g Mo) was prepared using an aqueous solution of ammonium molybdate sufficient to fill the pore volume of the alumina described in Example 1. The catalyst was then treated as described in Example 2. The cat cracking activity was obtained as described previously. The 6.9% $MoO_3$ on $Al_2O_3$ catalyst had an activity of 0.26 and 0.04 $cm^3$ $430^-$°F (221°C$^-$) liquid product/hour/g catalyst for a one-half hour and a one hour period on oil, respectively. The total gas produced after one hour was 4.2 l. The coke on catalyst was 15.5 and 12.9 wt. % for the top and the bottom of the catalyst bed, respectively.

This example has many important points to be made in comparison with the results of the other examples of the present invention. Firstly, it should especially be noted that the gas make and coke deposits of this catalyst are much higher than for any of the catalysts of the previous examples. Secondly, note the marked decrease in the catalytic activity for the one hour compared to the one-half hour run length. This decrease in activity results in an activity only 14% of that for the shorter sample period. In contrast, the $Nb_2O_5$ on $Al_2O_3$ catalyst for Example 6 maintained 76% of activity of the shorter sample period. Clearly, the $MoO_3$ on $Al_2O_3$ catalyst would result in a cat cracking catalyst with very poor characteristics: high gas production, large coke production and rapid catalyst deactivation. This example further serves to demonstrate that the cat cracking activity of a transition metal oxide supported on alumina is quite dependent on the transition metal chosen. Note, also, the quite different results of the $MoO_3$ on $Al_2O_3$ catalyst compared with $Cr_2O_3$ on $Al_2O_3$ catalysts of Example 10; see Table III B.

Example 12 (Comparative)

A 10 wt. % $WO_3$ on $Al_2O_3$ catalyst (containing 430 μm/g of W) was prepared using an aqueous solution of ammonium tungstate sufficient to fill the pore volume of the alumina described in Example 1. The catalyst was then treated as described in Example 2. The cat cracking activity was obtained as described previously. The 10% $WO_3$ on $Al_2O_3$ catalyst had an activity of 0.79 and 0.68 $cm^3$ $430^-$°F (221°C$^-$) liquid product/hour/g catalyst for a one-half hour and a one hour period on oil, respectively. The total gas produced after one hour was 2.2 l. The coke on catalyst was 4.3 and 6.0 wt. % for the top and the bottom of the catalyst bed, respectively.

This example has many important points to be made in comparison with the results of the other examples of the present invention. Firstly, it should especially be noted that this is the most active catalyst of all those in the previous examples but with relatively low gas production, e.g. 2.2 for $WO_3$ on $Al_2O_3$ compared with 4.2 for $MoO_3$ on $Al_2O_3$, Example 11. Secondly, the catalytic activity remains quite high for the one hour reaction period despite the relative high coke production on the catalyst. This is evidence for $WO_3$ on $Al_2O_3$ tolerating high coke deposits while maintaining high catalytic activity. High coke tolerance for an acid catalyst would be a much desired feature for a heavy resid cat cracking process; see Table III C.

Example 13

Another portion of the catalyst of Example 12 was steam treated at 900°C as described in Example 7. The cat cracking activity was obtained as described previously. The steam-treated 10% $WO_3$ on $Al_2O_3$ catalyst had an activity of 0.68 and 0.58 $cm^3$ $430^-$°F (221°C$^-$) liquid product/hour/g catalyst for a one-half hour and a one hour period on oil, respectively. The total gas produced was 2.3 l. The coke on the catalyst was 6.0 and 4.1 wt. % for the top and the bottom of the catalyst bed, respectively.

This example serves to demonstrate that the $WO_3$ on $Al_2O_3$ catalyst steamed at 900°C is not greatly decreased in activity compared with the unsteamed catalyst of Example 12. This example confirms the results obtained for the $Nb_2O_5$ on $Al_2O_3$ catalyst of Example 7. This example constitutes one of the most important results for the transition metal oxide acid catalysts of the present invention, i.e. high temperature steam stability; see Table III C.

Example 14 (Comparative)

A 10.9 wt. % $Re_2O_7$ on $Al_2O_3$ catalyst (containing 450 μm/g of Re) was prepared using an aqueous solution of perrhenic acid sufficient to fill the pore volume of the alumina described in Example 1. The catalyst was then treated as described in Example 2. The cat cracking activity was obtained as described previously. The 10.9% $Re_2O_7$ on $Al_2O_3$ catalyst had an activity of 0.06 and 0.04 $cm^3$ $430^-$°F (221°C$^-$) liquid product/hour/g catalyst for a one-half hour and a one hour period on oil, respectively. The total gas produced after one hour was 6.8 l. The coke on catalyst was 23.4 and 21.9 wt. % for the top and the bottom of the catalyst bed, respectively.

This example has many important points to be made in comparison to the results of the other examples of the instant invention. Firstly, this example emphasizes the completely different cat cracking results in changing in the third row of the periodic table from W to Re. The gas make and coke on catalyst of

the $Re_2O_7$ on $Al_2O_3$ catalyst would make the catalyst completely unsuitable as a catalyst because the valuable liquid product would be converted to a large degree to gases and coke. Secondly, the cracking activity of this catalyst is quite low in comparison with the $WO_3$ on $Al_2O_3$ catalyst of Example 12. This example further serves to demonstrate that the cat cracking activity of a transition metal oxide supported on alumina is quite dependent on the transition metal chosen; see Table III C.

TABLE III A
First row elements of group IVa, Va, VIa

| Catalyst | Conversion at 0.5 hr. | Conversion at 1 hr. | Gas make (1) | %C on cat top/bottom |
|---|---|---|---|---|
| 3.6% $TiO_2$ on $Al_2O_3$ | 0.9 | 0.7 | 0.6 | 1/1.4 |
| 4% $V_2O_5$ on $Al_2O_3$ | 4.9 | 2.7 | 0.7 | 2.1/1.6 |
| 4.5% $Cr_2O_3$ on $Al_2O_3$ (Aq. Prep.) | 1.2 | 0.6 | 0.7 | 3.4/1.9 |
| 4.5% $Cr_2O_3$ on $Al_2O_3$ | 0.2 | 1.1 | 0.7 | 2.0/1.7 |
| (Non-Aq. Prep.) $Al_2O_3$ blank | 0.1 | 0.2 | 0.4 | 1.6/0.7 |

It is clear from the data in the above Table that vanadium oxide is the only first row transition metal oxide with appreciable activity. This activity is still a factor of three lower than for 10% $WO_3$ on $Al_2O_3$, however.

TABLE III B
Second row elements of group IVa, Va and VIa

| Catalyst | Conversion at 0.5 hr. | Conversion at 1 hr. | Gas make (1) | %C on cat top/bottom |
|---|---|---|---|---|
| 5.6% $ZrO_2$ on $Al_2O_3$ | 0.7 | 0.7 | 0.5 | .9/.3 |
| 6% $Nb_2O_5$ on $Al_2O_3$ | 12.9 | 9.8 | 0.8 | 1.5/1.5 |
| 6% $Nb_2O_5$ on $Al_2O_3$ (Steamed at 900°C) | 10.3 | 5.2 | 1.0 | 2.5/2.3 |
| 6.9% $MoO_3$ on $Al_2O_3$ | 5.7 | 0.8 | 4.2 | 15.5/12.9 |
| $Al_2O_3$ blank | 0.1 | 0.2 | 0.4 | 1.6/0.7 |

The data in the above table are very significant. The cracking activity of $Nb_2O_5$ on $Al_2O_3$ is very high, only ca. 25% less than 10% $WO_3$ on $Al_2O_3$. However, the gas make and coke on catalyst are both less than $WO_3$ on $Al_2O_3$. Also, the above $Nb_2O_5$ on $Al_2O_3$ catalyst shows good steam stability as found for $WO_3$ on $Al_2O_3$. This is a very promising catalyst discovery. Note also the much greater activity of $Nb_2O_5$ catalyst compared with the other second row elements. Particularly, note the huge coke production of the $MoO_3$ catalyst.

TABLE III C
Third row elements of group IVa, Va, VIa, VIIa

| Catalyst | Conversion at 0.5 hr. | Conversion at 1 hr. | Gas make (1) | %C on cat top/bottom |
|---|---|---|---|---|
| 9.5% $HfO_2$ on $Al_2O_3$ | 0.3 | 0.4 | 0.2 | 0.8/0.5 |
| 10% $Ta_2O_5$ on $Al_2O_3$ | 2.1 | 1.4 | 0.4 | 1/1.1 |
| 10% $Ta_2O_5$ on $Al_2O_3$ (Steamed) | 0.9 | 0.1 | 1.7 | 6.1/8.4 |
| 10% $WO_3$ on $Al_2O_3$ | 17.1 | 14.9 | 2.2 | 4.3/6.0 |
| 10% $WO_3$on $Al_2O_3$ (Steamed) | 14.8 | 12.5 | 2.3 | 6.0/4.1 |
| 10% $WO_3$ on $SiO_2$ (P.P.G. Beads, Non-Aq. Prep.) | 1.3 | 0 | 0.5 | |
| 10% $WO_3$ on $SiO_2$ $Al_2O_3$ | 15.4 | 10.3 | 2.2 | |
| 10.9% $Re_2O_7$ on $Al_2O_3$ | 1.2 | 0.8 | 6.8 | 23.4/21.9 |
| $Al_2O_3$ Blank | 0.1 | 0.2 | 0.4 | 1.6/0.7 |

The above data demonstrate that the $WO_3$ on $Al_2O_3$ catalyst is far superior to any of the third row metals of Group IVa, Va, VIa and VIIa. Also, the $WO_3$ on $Al_2O_3$ catalyst is steam stable as evidenced by the steam catalyst having 85% of the fresh catalyst activity.

Example 15 (Comparative)

An alumina (γ-$Al_2O_3$) extrudate available commercially (Englehard Industries) was evaluated for cat cracking activity under conditions described above. At these conditions after 1 hour on oil, the $Al_2O_3$ catalyst had an activity of 0.01 $cm^3$ $430^-$°F (221°C$^-$) liquid product/hour/g cat. The total gas production after 1 hour was 0.4 liter. This example is for comparison with other catalysts of the present invention.

Example 16 (Comparative)

A 2% $WO_3$ on $Al_2O_3$ catalyst was prepared by standard *Weight hourly space velocity impregnation techniques using an aqueous solution of ammonium metatungstate (AMT) onto the alumina extrudate described in Example 15. Following drying at 110°C overnight this catalyst was calcined at 500°C for 16 hours and then evaluated for cat cracking activity under identical conditions to those described previously. At these conditions the activity for $430^-$°F (221°C$^-$) liquid production is 0.40 $cm^3$ $430^-$°F (221°C$^-$) liquid product/hour/g cat. The gas production after 1 hour was 0.5 liter. This example is for comparison with other catalysts of the current invention. This example also illustrates the much higher activity for cat cracking of 2% $WO_3$ on $Al_2O_3$ catalyst compared with the pure $Al_2O_3$ support described in Example 15.

Example 17

A portion of the 2% $WO_3$ on $Al_2O_3$ catalyst described in Example 16 was steam treated at 900°C for 16 hours in air sparged through water. After steaming, a portion of the catalyst was evaluated for activity for cat cracking of gas oil under conditions identical to those described previously. At these conditions the activity for $430^-$°F liquid production is 0.22 $cm^3$ $430^-$°F (221°C$^-$)/hr/g cat. The gas production after 1 hour was 0.5 liter. This example serves to demonstrate the superior catalytic activity of this high temperature steam catalyst compared with alumina itself, Example 15. This catalyst also demonstrates that about one-half the catalytic activity has been maintained following the above high temperature steam treatment compared to the unsteamed catalyst of Example 16. This example is also of value when compared with other tungsten oxide catalysts of the present invention.

Example 18 (Comparative)

A 4% $WO_3$ on $Al_2O_3$ catalyst was prepared by standard impregnation techniques using an aqueous solution of ammonium metatungstate onto the alumina extrudate described in Example 15. This catalyst was calcined in air at 500°C for 16 hours and then evaluated for cat cracking activity under conditions identical to those described previously. At these conditions the activity for $430^-$°F (221°C$^-$) liquid production is 0.40 $cm^3$ $430^-$°F (221°C$^-$) liquid/hour/g cat. The total gas make after 1 hour is 0.7 liter. This example is useful for comparison with the steamed catalyst of Example 19. The catalytic activity of this

example is quite close to the activity obtained for the catalyst of Example 16 despite the factor of two differences in the tungsten oxide content of this catalyst.

Example 19

A portion of 4% $WO_3$ on $Al_2O_3$ catalyst described in Example 18 was subjected to a steaming treatment for 16 hours at a temperature of 900°C. After this treatment the cat cracking activity for $430^-$°F (221°C$^-$) liquid production was 0.53 $cm^3$ $430^-$°F (221°C$^-$) liquid/hour/g cat. The total gas production after 1 hour was 0.9 liter.

This example demonstrates a unique feature of the $WO_3$ on $Al_2O_3$ catalysts of the present invention. The catalytic activity of this high temperature steamed catalyst is increased over the unsteamed catalyst, Example 18. In addition, the activity of this steamed 4% $WO_3$ on $Al_2O_3$ catalyst is much greater than the activity of the steamed 2% $WO_3$ on $Al_2O_3$ catalyst of Example 17. This example thereby demonstrates the critical dependence of tungsten oxide content on catalytic activity following severe steaming conditions.

Example 20 (Comparative)

A 6% $WO_3$ on $Al_2O_3$ catalyst was prepared by impregnation of an aqueous solution of ammonium metatungstate onto the alumina extrudate described in Example 15. This catalyst was then calcined in air for 16 hours at 500°C and then evaluated for cat cracking activity under conditions previously described. At these conditions, the activity for $430^-$°F (221°C$^-$) liquid production is 0.69 $cm^3$ $430^-$°F (221°C$^-$) liquid/hr/g cat. The total gas make after 1 hour is 1.8 liter. This example demonstrates the superior activity of a 6% $WO_3$ on $Al_2O_3$ to either the 4% $WO_3$ on $Al_2O_3$ catalyst, Example 18, or the 2% $WO_3$ on $Al_2O_3$ catalyst, Example 16. This example further demonstrates the critical dependence on tungsten oxide content of catalytic activity. This example is useful for comparison with Example 21.

Example 21

A portion of the 6% $WO_3$ on $Al_2O_3$ catalyst described in Example 20 was subjected to a steaming treatment for 16 hours at 900°C. After this treatment the cat cracking activity for $430^-$°F (221°C$^-$) liquid production was 1.00 $cm^3$ $430^-$°F (221°C$^-$) liquid/hour/g cat. The total gas make after 1 hour on stream was 1.8 liter. This example illustrates the superior activity of the steamed 6% $WO_3$ on $Al_2O_3$ catalyst compared to the unsteamed 6% $WO_3$ on $Al_2O_3$ catalyst described in Example 20. This example demonstrates a unique feature of $WO_3$ on $Al_2O_3$ catalysts of the present invention. The catalytic activity of this high temperature steamed catalyst is increased over that of the unsteamed catalyst of Example 20. In addition, the activity of the steamed catalyst is higher than the steamed and unsteamed 4% $WO_3/Al_2O_3$ catalysts of Examples 18 and 19 and also higher than the activities of the steamed and unsteamed 2% $WO_3/Al_2O_3$ catalysts of Examples 16 and 17. This demonstrates the critical dependence of $WO_3$ content on catalytic activity following severe steaming treatment.

Example 22 (Comparative)

An 8% $WO_3/Al_2O_3$ catalyst was prepared by impregnating an aqueous solution of ammonium metatungstate onto the alumina extrudate described in Example 15. This catalyst was calcined for 16 hours at 500°C and then evaluated for cat cracking activity under conditions identical to those described previously. At these conditions, the activity for $430^-$°F (221°C$^-$) liquid production is 0.73 $cm^3$ $430^-$°F (221°C$^-$) liq/hr/g cat. The total gas make after 1 hour is 2.0 liter. This example is useful for comparison with the steamed catalyst of Example 23.

Example 23

A portion of the 8% $WO_3$ on $Al_2O_3$ catalyst described in Example 22 was subjected to a steaming treatment for 16 hours at 900°C. After this treatment, the cat cracking activity for $430^-$°F (221°C$^-$) liquid production was 0.81 $cm^3$ $430^-$°F (221°C$^-$)/hr/g cat. The total gas make after 1 hour on stream was 2.0 liter. This example demonstrates a unique feature of the $WO_3/Al_2O_3$ catalysts of the current invention. The catalytic activity of this high temperature steamed catalyst is increased over the unsteamed catalyst, Example 22. In addition the activity of this steamed catalyst is more active than the steamed 2% $WO_3$ on $Al_2O_3$ and 4% $WO_3$ on $Al_2O_3$ catalysts of Examples 17 and 19, respectively. However, the activity of this steamed catalyst is lower in activity compared with the steamed 6% $WO_3$ on $Al_2O_3$ catalyst of Example 21. This example further demonstrates the critical dependence of tungsten oxide content on catalytic activity following severe steaming treatments.

Example 24 (Comparative)

A 10% $WO_3/Al_2O_3$ catalyst was prepared by impregnating an aqueous solution of ammonium metatungstate onto the alumina extrudate described in Example 15. This catalyst was calcined in air at 500°C for 16 hours and evaluated for cat cracking activity under conditions identical to those described previously. At these conditions the activity for $430^-$°F (221°C$^-$) liquid production of 0.95 $cm^3$ $430^-$°F (221°C$^-$)/hr/g cat. The total gas make after 1 hour on stream is 2.2 liter. This example is useful for comparison with Example 25. This example also demonstrates a higher activity compared with other unsteamed $WO_3/Al_2O_3$ catalysts of lower $WO_3$ concentrations.

Example 25

A portion of the 10% $WO_3/Al_2O_3$ catalyst described in Example 24 was subjected to a steaming treatment at 900°C for 16 hours. After this treatment, the cat cracking activity for 430⁻°F (221°C⁻) liquid production was 0.80 $cm^3$ 430⁻°F (221°C⁻)/hr/g cat. The total gas make after 1 hour on stream was 2.3 liter. This example demonstrates the unique feature of good high temperature stability of $WO_3/Al_2O_3$ catalysts of the present invention.

Example 26 (Comparative)

A 25% $WO_3$ on $Al_2O_3$ catalyst was prepared by impregnating an aqueous solution of ammonium metatungstate onto an alumina extrudate identical to and described in Example 15. This catalyst was calcined in air at 500°C for 16 hours and then evaluated for cat cracking activity under conditions identical to those described previously. At these conditions the activity for 430⁻°F (221°C⁻) liquid production is 0.49 $cm^3$ liquid/hour/g cat. The total gas make after 1 hour on stream is 4.6 liter. This example is useful for comparison with catalysts of the present invention. This example demonstrates little advantage of increased $WO_3$ content much above the 10% $WO_3$ content described in Example 24.

Example 27 (Comparative)

An amorphous silica-alumina catalyst (13% $Al_2O_3$) that had been air calcined at 540°C for 16 hours was evaluated for cat cracking activity under conditions identical to those described above. Under these conditions, the activity for 430⁻°F (221°C⁻) liquid production was 0.83 $cm^3$ 430⁻°F (221°C⁻) liquid/hour/g cat. The total gas make after 1 hour on stream was 2.8 liter. This example is useful for comparison with catalysts of the current invention. Fresh $SiO_2 \cdot Al_2O_3$ has activity comparable to 8% $WO_3$ on $Al_2O_3$ (Example 22) and 10% $WO_3$ on $Al_2O_3$ (Example 24). This example is also useful for comparison with Examples 28 and 29.

Example 28 (Comparative)

A portion of the $SiO_2 \cdot Al_2O_3$ catalyst described in Example 27 was steamed for 16 hours at 760°C. The activity of this catalyst was 0.72 $cm^3$ 430⁻°F (221°C⁻) liquid/hour/g cat. The total gas make after 1 hour was 0.7 liter. This example is useful for comparison with Examples 32 and 33 and to catalysts of the current invention. A steaming treatment at 760°C has only a modest effect on activity compared with the activity of a fresh $SiO_2Al_2O_3$ catalyst (Example 27). This catalyst is comparable in activity to $WO_3$ on $Al_2O_3$ catalysts, both fresh and steamed, described in Examples 20 to 25.

Example 29 (Comparative)

A portion of the $SiO_2 \cdot Al_2O_3$ catalyst described in Example 27 was steam treated for 16 hours at 900°C. The activity of this catalyst was 0.32 $cm^3$ 430⁻°F (221°C⁻) liquid/hour/g cat. The total gas make after 1 hour on stream was 0.8 liter. This example is useful for comparison to Example 27 and 28 and to catalysts of the present invention. The $SiO_2 \cdot Al_2O_3$ catalyst steamed at 900°C has lost substantial activity compared to fresh $SiO_2 \cdot Al_2O_3$ catalysts (Example 27) and to $SiO_2 \cdot Al_2O_3$ catalyst steamed at lower temperature (Example 28). This example also serves to show that commercially available $SiO_2 \cdot Al_2O_3$ cat cracking catalysts have substantially lower thermal stability in the presence of steam compared with catalysts of the current invention (see Examples 19 to 25).

Example 30 (Comparative)

A commercial zeolite cracking catalyst consisting of 8.5% zeolite in an amorphous $SiO_2 \cdot Al_2O_3$ matrix was calcined at 540°C for 16 hours under conditions identical to those described above. The catalyst had an activity for 430⁻°F (221°C⁻) liquid production of 1.35 $cm^3$ 430⁻°F (221°C⁻)/hour/g cat. Total gas make after 1 hour was 3.3 liter. This example is useful for comparison with Examples 31 and 32 and to catalysts of the current invention. This example demonstrates that a typical fresh zeolite cat cracking catalyst has activity somewhat higher than catalysts of the current invention. For example the activity of this catalyst is 1.42 times more active than the 10% $WO_3$ on $Al_2O_3$ catalyst described in Example 24.

Example 31 (Comparative)

A portion of the catalyst described in Example 30 was steam treated at 760°C for 16 hours. This catalyst had an activity of 1.42 $cm^3$ 430⁻°F (221°C⁻)/hour/g cat. The total gas make after 1 hour on stream was 2.9 liter. This example is useful for comparison with Examples 30 and 32 and with catalysts of the current invention. A steaming treatment at 760°C has a slight beneficial effect on the activity of this catalyst compared with a fresh calcined catalyst described in Example 30. The activity of this catalyst is somewhat higher than catalysts of the current invention.

Example 32 (Comparative)

A portion of the catalyst described in Example 30 was steam treated at 900°C for 16 hours. This catalyst had an activity of 0.10 $cm^3$ 430⁻°F (221°C⁻)/hr/g cat. Total gas make after 1 hour on stream was 0.9 liter. This example is useful for comparison with Examples 30 and 31 and with catalysts of the current invention. The activity of the zeolite cracking catalyst following a severe steaming treatment at 900°C declines more than in order of magnitude compared with the activity of a fresh zeolite catalyst (Example 30) or a zeolite catalyst

steamed at lower temperatures (Example 31). This example also serves to show the much superior thermal stability of the catalyst of the current invention compared with a state of the art commercial cat cracking catalyst; see for example the effect of steaming on the activity of catalysts in Examples 19 to 25.

Steam stability of $WO_3$ on $Al_2O_3$ vs zeolite or $SiO_2 \cdot Al_2O_3$

In the previous discussion on the Group IV, V, VI and VIIB metal oxides as cracking catalysts the conditions employed to test the catalysts were reported. Therefore, they will not be repeated here. Below are the data obtained by comparing the $WO_3$ on $Al_2O_3$ catalyst with $SiO_2 \cdot Al_2O_3$ as well as a commercial zeolite cat cracking catalyst. Each catalyst was investigated fresh, steamed at 1400°F (760°C) and also at 1600°F (871°C). The steam stability at 1600°F (871°C) is a crucial requirement for steam gasification of the carbon deposits on the catalyst which might be a requirement for a resid cat cracking process.

TABLE IV

| Catalyst | Conversion at 0.5 hr. | Conversion at 1 hr. | Gas make (1) | % C on cat top/bottom |
|---|---|---|---|---|
| 10% $WO_3$ on $Al_2O_3$ (Fresh) | 22.5 | 13.5 | 2.1 | 5.2/5.2 |
| 10% $WO_3$ on $Al_2O_3$ (Repeat preparation fresh) | 17.1 | 14.9 | 2.2 | 4.3/6.0 |
| 10% $WO_3$ on $Al_2O_3$ (Steamed 900°C) | 14.8 | 12.5 | 2.3 | 6.0/4.1 |
| Zeolite catalyst (Fresh) | 20.7 | 21.1 | 3.3 | 3.4/4.2 |
| Zeolite catalyst (Steamed 760°C—1400°F) | 38.8 | 22.2 | 2.9 | 2.1/3.4 |
| Zeolite catalyst (Steamed 900°C—1660°F) | 4.0 | 1.6 | 0.9 | 1.5/1.4 |
| Silica-Alumina (14% $Al_2O_3$) Fresh | 11.8 | 12.9 | 2.8 | 4.3/5.2 |
| Silica-Alumina (Steamed 760°C—1400°F) | 19.2 | 11.3 | 0.7 | 2.5/2.1 |
| Silica-Alumina (Steamed 900°C—1660°F) | 5.8 | 5.0 | 0.8 | 2.1/1.8 |

The zeolite and silica-alumina catalysts steamed at 1650°F (899°C) are much less active than the steam stable $WO_3$ on $Al_2O_3$ catalyst. Also, the activity of the fresh $WO_3$ on $Al_2O_3$ catalyst compares favorably after a one-hour run period with either fresh zeolite or fresh silica-alumina catalyst.

It has also been demonstrated that a marked difference in catalyst activity between the $WO_3$ on $Al_2O_3$ catalyst calcined in steam at 900°C and the same weight loading of tungsten oxide impregnated onto pre-steamed alumina. Consider the table below. All catalysts were at the 4 wt. % $WO_3$ level.

TABLE V

| Catalyst | Conversion at 0.5 hr. | Conversion at 1 hr. | Gas make (1) | % C on cat top/bottom |
|---|---|---|---|---|
| 4% $WO_3$ (Fresh) | 8.9 | 6.2 | 0.7 | 0.9/1.0 |
| Above cat steamed at 900°C | 11.3 | 8.3 | 0.9 | 2.4/2.2 |
| Steamed $Al_2O_3$ followed by identical prep. as for 4% $WO_3$ catalyst above (Fresh) | 9.7 | 2.8 | 0.6 | 2.0/2.7 |

Note the large drop in catalyst activity following one hour reaction period.

Example 33 (Comparative)

The preparation of high surface area γ-$Al_2O_3$ (190 $m^2/g$) in extrudate form where a carbon char was formed in the pores of the extrudate was achieved by the following procedure. A standard sugar solution was prepared by dissolving 250 g of sucrose in 100 milliliters of distilled water heated to 140°F (60°C). A 50 milliliter portion of this saturated solution was contacted with 100 g of γ-alumina extrudates of reforming grade purity (Englehard Industries, Inc.). This amount of the sugar solution was just that amount which would fill the pore volume of the extrudates. Therefore, this procedure constitutes a quasi-incipient wetness impregnation. The entire amount of material was then dried at 120°C for 16 hours. Following this overnight drying step the weight of the extrudates plus the weight of sugar in the pores was 135 g. Therefore, a 35% weight increase occurred due to the sugar impregnation step. The above preparation was then divided into two equal portions. Each portion was then treated in a tube furnace for 16 hours under a blanket of flowing helium to "char" the sugar in the pores of the alumina extrudate. Large quantities of water were removed in this heat treatment step. The weight percent carbon found on a sample from each bath treated at 600°C was in good agreement, 7.0 and 7.2 wt. % carbon. These two batches were then combined and used in a series of experiments reported in other Examples.

Example 34 (Comparative)

A few gram portion of the carbonized-alumina of Example 33 was heated in a tube furnace at 1100°C in a reducing atmosphere of 15% H in Argon to ensure that the carbon would not be removed by oxidation. The objective of this heat treatment was to convert the γ-alumina phase to an α-alumina phase while maintaining high surface area. The sample was kept at this temperature for 16 hours. The sample was then removed from the tube furnace at ambient temperature. To remove the carbon from the pores of the alumina the sample was treated in a tube furnace at 680°C in flowing 20% oxygen in helium at a flow rate of 500 $cm^3$/minute for 16 hours. The X-ray diffraction pattern for a powder sample indicated a mixture of alumina phases to be present for the 1100°C heat treatment. Both γ- and α-$Al_2O_3$ phases were present. This example serves to demonstrate that partial conversion of the γ-alumina occurs at 1100°C for a portion of the sample of Example 33 with 7% carbon in the pores of the extrudate. The surface area of this extrudate was 80.3 $m^2/g$.

Example 35 (Comparative)

A few grams of the carbonized-alumina of Example 33 were treated as described in Example 34 except that the high temperature treatment was increased to 1150°C. Treatment at 1150°C resulted in complete conversion of the γ-alumina phase to α-alumina based on the X-ray diffraction pattern of this sample. The surface area of this sample was 37.6 $m^2/g$. This example serves to demonstrate the sensitivity of the γ-alumina to α-alumina phase transformation as a function of temperature. The weight % carbon on this α-$Al_2O_3$ sample was only 0.06 wt. % following the calcination step. This low carbon level indicates that a carbon-free α-phase has been produced by the procedure described in Example 34.

Example 36 (Comparative)

A few grams of the carbonized-alumina of Example 33 were treated as described in Example 34 except that the high temperature heat treatment was increased to 1200°C. The X-ray diffraction pattern of this sample was quite similar to that of Example 35. This indicates, of course, that the 1150°C treatment temperature was very near to the lower temperature limit which converts the alumina described in Example 1 to the α-phase. The surface area of the α-$Al_2O_3$ produced by the above 1200°C calcination treatment was 21.3 $m^2/g$. This example serves to demonstrate the advantages of a minimum temperature of heat treatment in maintaining a high surface area for the α-alumina phase produced. The α-alumina produced in Example 35 at 1150°C has a surface area nearly double that of the material of this Example. This example points to a very important function of temperature in controlling the final α-alumina surface area. It is most important in many catalytic processes known to those skilled in the art to maintain the maximum surface area of the catalyst in as high a state as possible. This example clearly shows the unexpected importance of small temperature differences in producing a material of maximum surface area.

Example 37 (Comparative)

Instead of using a few grams of the carbonized-alumina, 70 g of the material was heat treated at 1150°C as in Example 35. However, instead of a calcination treatment at 700°C to remove the carbon a calcination step at 892°C for 16 hours in 20% $O_2$ in helium at 500 $cm^3$/min. was used. As noted in Example 35, X-ray analysis of this sample showed complete conversion of γ-alumina to α-alumina. Also, the surface area of this sample was found to be 43.2 $m^2/g$. This example serves to demonstrate two important points. Firstly, a high surface area α-alumina in extrudate form can be prepared in a completely reproducible fashion as described in Example 35 by a 1150°C heat treatment. Secondly, the α-alumina produced in this example is stable to a 892°C calcination treatment. Note that the calcination treatment is 200°C higher than for the sample of Example 35 while having a slightly higher surface area. This remarkable stability of the α-alumina phase to desurfacing under extreme temperature conditions is an unexpected finding not recognized in the prior art. Also, it is quite significant that the surface area of this sample is over twice that of the 1200°C prepared sample of Example 36.

Example 38 (Comparative)

To 55 g of the α-alumina in extrudate form of Example 37, 3.16 g of ammonium metatungstate containing 2.89 g $WO_3$ in 27.5 $cm^3$ of water was added. This amount of liquid is just that which fill the pores of the extrudate. The sample was then dried for 16 hours at 120°C and finally calcined overnight at 500°C in a muffle furnace. The final catalyst contained 5 wt. % $WO_3$ on the α-$Al_2O_3$ extrudate. An X-ray analysis of a powdered sample indicated the $WO_3$ phase to be in less than 4.0 nm diameter particles as no lines due to a $WO_3$ phase were observed. In order to determine if the $WO_3$ on α-$Al_2O_3$ phase was acidic, a standard Benesi titration with n-butylamine was used. (K. Tanabe, "Solid Acids and Bases", Academic Press, N.Y. 1970, p. 14). The α-alumina itself, Example 37, was shown to have no strong acid sites (−8.2 and −5.6 on the Ho Hammett activity scale). However, for the 5% $WO_3$ α-alumina there were 37±12 μm/g of −8.2 strength acid centers. This example serves to demonstrate that introduction of $WO_3$ onto α-alumina produces a solid acid with strong acid sites. This material of this Example was investigated for gas oil catalytic cracking and was shown to have significant catalytic activity (Example 39).

Example 39 (Comparative)

The catalyst of Example 38 was investigated for gas oil cracking activity as described in previous examples. The catalytic activity following a one-half hour period was 0.19 $cm^3$ $430^-$°F (221°$C^-$) liquid produced/hour/g catalyst. The total gas production after one hour was 0.6 l. The coke on catalyst was 1.3 and 1.3 wt. % for the top and the bottom of the catalyst bed, respectively. This example serves to demonstrate that $WO_3$ on α-$Al_2O_3$ is an active cat cracking catalyst. The activity of $WO_3$ on α-$Al_2O_3$ compared with γ-$Al_2O_3$ of Example 1 was a factor of 38 higher. The α-$Al_2O_3$ of Example 37 itself would be less active than γ-$Al_2O_3$ as α-$Al_2O_3$ was shown to have no strong acid sites (see discussion Example 38).

Example 40

To 29.34 g of the α-alumina in extrudate form of Example 6, 0.657 g of ammonium meta-tungstate was added as described in Example 38. The above sample was dried and calcined as described in Example 38. The final catalyst contained 2 wt. % $WO_3$ on α-$Al_2O_3$. Fifteen grams of the above sample were calcined for 16 hours at 900°C in air sparged through water. The surface area of this sample following this severe steaming treatment was found to be 33.7 $m^2$/g. This example serves to demonstrate the good surface area stability of $WO_3$-supported on the α-alumina of the present invention. Note that the surface area of the α-alumina of Example 37, 43.2 $m^2$/g is largely preserved for a sample containing $WO_3$ and following a severe steaming treatment.

Example 41

This example relates to coke buildup and regeneration of the coked catalyst with simultaneous production of low BTU value fuel gas. In this experiment conventional cat cracking reaction conditions were used in a unit employing a batch fluidized catalyst bed. Typical catalyst contact times were about two minutes. This unit is similar to Micro Activity Testing (MAT) Units used industry-wide for cracking catalyst evaluation. These tests are particularly relevant to the conceptual scheme of this invention. The information obtained is the activity defined as the amount of feed converted to $430^-$°F (221°$C^-$) product and the selectivity to $C_5$—430°F (221°C) gasoline, $C_1$—$C_4$ gases, hydrogen, 430—650°F (221°—343°C) middle distillate, and coke.

The catalysts tested were a 10% $WO_3/Al_2O_3$ catalyst and a 2% BaO/10%$WO_3/Al_2O_3$ catalyst. These catalysts were tested with two different feeds and in the presence and absence of water. In Tables I and IIA a comparison of the $WO_3/Al_2O_3$ catalyst with conventional amorphous silica-alumina and commercial zeolite containing catalyst is made by highlighting the principal selectivity factors. In general the activity of the 10% $WO_3/Al_2O_3$ catalyst is comparable to the silica-alumina catalyst.

The results presented in Tables VI and VII suggest a variety of process opportunities. If it is desirable to minimize coke two options are suggested by the results in Table II. First it can be seen that operating with steam addition to the reactor substantially lowers coke make. Also, as the data in Table VIIIB indicate, extending the residence time of the catalyst in the bed from 2 min. to 20 min. greatly lowers the amount of coke produced on feed. The data indicates that there is first a large buildup of coke on catalyst followed then by a long period of time with little additional coke make but nearly constant feed conversion. The significance of this is two-fold; one is that by operating with residual coke on catalyst, the initial rapid coking and resultant poor selectivity to hydrocarbon products is mitigated. Secondly, the gasifier/regenerator may be reduced in size as the residence time necessary to gasify a smaller amount of coke would correspondingly be lower. On the other hand, depending on the type of feed used it may be advantageous to maximize the amount of coke converted to low BTU gas or synthesis gas in the gasifier/regenerator. Thus, as the data in Table VII show, coke can be maximized by operating the reactor in a steam free environment.

TABLE VI

Comparison of $WO_3/Al_2O_3$ type catalysts to standard catalysts in MCC experiments

Feed: ETLGO

$T_{cat}$: 950°F (510°C)

| Catalyst | $WO_3/Al_2O_3$ | Silica-alumina | Zeolite |
|---|---|---|---|
| Pretreatment | 1400°F STM (760°C) | 1400°F STM (760°C) | 1400°F STM (760°C) |
| Gas added during cycle | Steam | None | None |
| Cycle length, min | 2 | 2 | 2 |
| W/hr/W | 3.06 | 1.96 | 14.6 |
| Conversion, Wt% | 55.0 | 60.0 | 60.0 |
| Carbon, Wt% | 7.3 | 4.3 | 0.8 |
| $C_3^-$, Wt% | 10.4 | 12.9 | 5.1 |
| Tot. $C_4$, Wt% | 10.4 | 14.0 | 7.7 |
| $C_5$/430°F (221°C), Wt% | 26.9 | 28.7 | 46.4 |
| $C_3H_6$, SCF/B | 192 (34.2 l/l) | 199 (35.4 l/l) | 125 (22.3 l/l) |
| $H_2$, SCF/B | 238 (42.4 l/l) | 68 (12.1 l/l) | 16 (2.8 l/l) |

TABLE VII

A. with ETLGO (500—700°F (260°—371°C)) feed

| Catalyst | 10% $WO_3/Al_2O_3$ | | 2% BaO/ 10% $WO_3/Al_2O_3$ | | 10% $WO_3/Al_2O_3$ | 2% BaO/ 10% $WO_3/Al_2O_3$ | Zeolite |
|---|---|---|---|---|---|---|---|
| Pretreatment | ← Htd. @ 1000°F (580°C) → | | | | ← Stmd. @ 1400°F (760°C) → | | |
| Gas added during cycle | Stm. | $N_2$ | Stm. | $N_2$ | Stm. | Stm. | None |
| W/Hr./W | 2.90 | 2.91 | 2.76 | 2.77 | 3.06 | 2.83 | 14.6 |
| Conversion, Wt. % | 56.5 | 70.8 | 38.3 | 58.7 | 55.0 | 38.8 | 60 |
| Carbon, Wt. % | 15.0 | 22.4 | 13.8 | 16.3 | 7.3 | 11.0 | 0.8 |
| $C_3^-$ Gas, Wt. % | 8.1 | 12.6 | 3.1 | 7.7 | 10.4 | 4.1 | 5.1 |
| Tot. $C_4$, Wt. % | 8.1 | 11.6 | 3.1 | 7.6 | 10.4 | 4.1 | 7.7 |
| $C_5$/430°F (221°C), Wt % | 25.3 | 24.3 | 18.3 | 27.1 | 26.9 | 19.5 | 46.4 |
| $C_3H_6$, SCF/B (l/l) | 146 (26.0) | 178 (31.7) | 50 (8.9) | 116 (20.6) | 192 (34.2) | 75 (13.4) | 125 (22.3) |
| $H_2$, SCF/B (l/l) | 204 (36.3) | 655 (116) | 76 (13.5) | 288 (42.4) | 238 (42.4) | 73 (13.0) | 16 (2.8) |

TABLE VII (contd.)
B. Heavy gas oil

| Catalyst | 10% $WO_3/Al_2O_3$ | 2%BaO/ 10%$WO_3/Al_2O_3$ | 2%BaO/10%$WO_3/Al_2O_3$ | | |
|---|---|---|---|---|---|
| Pretreat | ← Stmd @ 1400°F (760°C) → | | | | |
| Gas added | ← Steam during process period → | | | | |
| Cycle length, min. | 2 | 2 | 2 | 16 | 20 |
| W/Hr./W | 3.15 | 3.05 | 2.94 | 2.94 | 2.94 |
| Conversion, Wt. % | 67.7 | 60.3 | 56.0 | 48.6 | 47.3 |
| Carbon, Wt. % | 9.6 | 12.8 | 3.9* | 3.9* | 3.9* |
| $C_3^-$ Gas Wt. % | 13.0 | 7.5 | 7.7 | 9.1 | 6.8 |
| Tot. $C_4$, Wt. % | 12.3 | 6.9 | 6.8 | 4.6 | 3.0 |
| $C_5$/430°F (221°C), Wt. % | 32.8 | 33.1 | 37.7 | 31.0 | 33.6 |
| $C_3H_6$, SCF/B (l/l) | 263 (46.8) | 159 (28.3) | 151 (26.9) | 147 (26.2) | 101 (18.0) |
| $H_2$, SCF/B (l/l) | 270 (48.0) | 90 (16.0) | 141 (25.1) | 155 (27.6) | 132 (23.5) |

* Average for total 20 minute cycle based on carbon analysis as measured on catalyst discharged at end of experiment.

**Claims**

1. A supported acid catalyst comprising as a catalytic component one or more of an oxide of tungsten or of niobium, or of said oxide in combination with one or more additional metal oxides selected from tantalum oxide, hafnium oxide, chromium oxide, titanium oxide and zirconium oxide, and as the support an inorganic refractory metal oxide base which is either not itself an acid cracking catalyst or is a silica-containing cracking catalyst having a silica content of less than 50 wt.% calculated as $SiO_2$ and said catalyst being steamed before use at a temperature ranging from between 600—1200°C in an atmosphere comprising from 0.1 to 100% steam, the balance being an inert gas when less than 100% steam is used.

2. A catalyst according to claim 1 in which said inorganic refractory metal oxide support which is not itself an acid cracking catalyst is alumina, titania, zirconia, boria, thoria, magnesia, zirconium-titanate, chromia, silica, kieselguhr or a mixture thereof.

3. A catalyst according to claim 2 in which said inorganic refractory metal oxide support comprises alumina.

4. A catalyst according to any one of the preceding claims in which said catalyst contains one or more promoter materials selected from oxides of barium, calcium and magnesium in an amount ranging from 0.1 to 4.0% by weight based on the catalytic metal oxide content.

5. A process of hydrocarbon conversion which comprises contacting the catalyst of any one of the preceding claims in a hydrocarbon conversion zone with a hydrocarbon feed stream at elevated temperature for a time sufficient to effect the desired hydrocarbon conversion.

6. A process according to claim 5 in which said elevated temperature is in the range from 300—900°C.

7. A process according to either of claims 5 and 6 in which said hydrocarbon conversion comprises catalytic cracking.

8. A process according to any one of claims 5 to 7 which includes:

(a) removing coked catalyst from the said hydrocarbon conversion zone;

(b) regenerating the coked catalyst by contacting same at an elevated temperature with steam, oxygen-containing gas or a mixture thereof to produce a regenerated catalyst and a hydrogen-rich gas or a low BTU gas rich in carbon dioxide or a combination thereof; and

(c) recirculating the regenerated catalyst produced in step (b) back to the hydrocarbon conversion zone of step (a).

**Patentansprüche**

1. Saurer Trägerkatalysator umfassend als eine katalytische Komponente eines oder mehrere von einem Oxid von Wolfram oder Niob oder von diesem Oxid in Kombination mit einem oder mehreren zuyätzlichen Metalloxiden ausgewählt aus Tantaloxid, Hafniumoxid, Chromoxid, Titanoxid und Zirkonoxid und als den Träger eine anorganische feuerfeste Metalloxidbasis, die entweder nicht selbst ein saurer Crackkatalysator oder ein siliciumdioxidhaltiger Crackkatalysator mit einem Siliciumdioxidgehalt von weniger als 50 Gew.%, berechnet als $SiO_2$, ist, wobei der Katalysator vor der Verwendung bei einer Temperatur im Bereich von 600 bis 1200°C in einer 0,1 bis 100% Dampf enthaltenden Atmosphäre, die im übrigen aus einem inerten Gas besteht, wenn weniger als 100% Dampf verwendet werden, einer Dampfbehandlung unterworfen worden ist.

2. Katalysator nach Anspruch 1, dadurch gekennzeichnet, daß der anorganische feuerfeste Metalloxidträger, der nicht selbst ein saurer Crackkatalysator ist, Aluminiumoxid, Titanoxid, Zirkonoxid, Boroxid, Thoriumoxid, Magnesiumoxid, Zirkontitanat, Chromoxid, Siliciumdioxid, Kieselgur oder eine Mischung derselben ist.

3. Katalysator nach Anspruch 2, dadurch gekennzeichnet, daß der anorganische feuerfeste Metalloxidträger Aluminiumoxid enthält.

4. Katalysator nach einem der vorangehenden Ansprüche, dadurch gekennzeichnet, daß der Katalysator ein oder mehrere Promotormaterialien ausgewählt aus Oxiden von Barium, Calcium und Magnesium in einer Menge von 0,1 bis 4 Gew.% bezogen auf den Gehalt an katalytischem Metalloxid enthält.

5. Kohlenwasserstoffumwandlungsverfahren, dadurch gekennzeichnet, daß der Katalysator gemäß einem der vorangehenden Ansprüche in einer Kohlenwasserstoffumwandlungszone mit einem Kohlenwasserstoffeinsatzmaterialstrom bei erhöhter Temperatur ausreichend lange kontaktiert wird, um die gewünschte Kohlenwasserstoffumwandlung zu bewirken.

6. Verfahren nach Anspruch 5, dadurch gekennzeichnet, daß die erhöhte Temperatur im Bereich von 300 bis 900°C liegt.

7. Verfahren nach Anspruch 5 oder 6, dadurch gekennzeichnet, daß die Kohlenwasserstoffumwandlung katalytisches Cracken umfaßt.

8. Verfahren nach einem der Ansprüche 5 bis 7, dadurch gekennzeichnet, daß

(a) verkokter Katalysator aus der Kohlenwasserstoffumwandlungszone entfernt wird,

(b) der verkokte Katalysator regeneriert wird, indem er bei einer erhöhten Temperatur mit Dampf, sauerstoffhaltigem Gas oder einer Mischung derselben kontaktiert wird, um einen regenerierten

Katalysator und ein wasserstoffreiches Gas oder ein kalorienarmes, an Kohlendioxid reiches Gas oder eine Kombination derselben zu erzeugen, und

(c) der in Stufe (b) hergestellte regenerierte Katalysator in die Kohlenwasserstoffumwandlungszone von Stufe (a) zurückgeführt wird.

**Revendications**

1. Catalyseur acide supporté comprenant comme constituant catalytique une ou plusieurs substances choisies parmi un oxyde de tungstène ou de niobium ou un de ces oxydes en combinaison avec un ou plusieurs oxydes de métaux additionnels choisis parmi l'oxyde de tantale, l'oxyde d'hafnium, l'oxyde de chrome, l'oxyde de titane et l'oxyde de zirconium, et, comme support, une base minérale qui est un oxyde de métal réfractaire, lequel ou bien n'est pas lui-même un catalyseur de craquage acide, ou bien est un catalyseur de craquage content de la silice ayant une teneur en silice de moins de 50 % en poids, calculé en $SiO_2$, ce catalyseur étant traité par la vapeur d'eau avant emploi à une température comprise entre 600 et 1200°C dans une atmosphère comprenant 0,1 à 100 % de vapeur d'eau, le reste étant un gaz inerte lorsqu'on emploie moins de 100 % de vapeur d'eau.

2. Catalyseur selon la revendication 1, dans lequel le support minéral à base d'oxyde de métal réfractaire qui n'est pas lui-même un catalyseur de craquage acide est l'alumine, l'oxyde de titane, la zircone, l'oxyde de bore, la thorine, la magnésie, le titanate de zirconium, l'oxyde de chrome, la silice, le kieselguhr ou un mélange de ceux-ci.

3. Catalyseur selon la revendication 2, dans lequel le support minéral à base d'oxyde de métal réfractaire comprend de l'alumine.

4. Catalyseur selon l'une quelconque des revendications précédentes, caractérisé en ce qu'il contient un ou plusieurs activant choisis parmi les oxydes de baryum, calcium et magnésium en quantité allant de 0,1 à 4,0 % en poids par rapport à la teneur en oxyde de métal catalytique.

5. Procédé de conversion d'hydrocarbures qui comprend la mise en contact du catalyseur selon l'une quelconque des revendications précédentes dans une zone de conversion d'hydrocarbures avec un courant d'alimentation d'hydrocarbures à température élévée pendant une durée suffisante pour réaliser la conversion des hydrocarbures désirée.

6. Procédé selon la revendication 5, dans lequel la température élevée est de 300 à 900°C.

7. Procédé selon la revendication 5 ou 6, dans lequel la conversion des hydrocarbures comprend un craquage catalytique.

8. Procédé selon l'une quelconque des revendications 5 à 7 qui comprend:

(a) l'extraction du catalyseur recouvert de coke de la zone de conversion des hydrocarbures.

(b) la régénération du catalyseur recouvert de coke par mise en contact de celui-ci, à température élevée, avec de la vapeur d'eau, un gaz contenant de l'oxygène ou un mélange de ceux-ci pour produire un catalyseur régénéré et un gaz riche en hydrogène ou un gaz à faible pouvoir calorifique riche en anhydride carbonique ou une combinaison de ceux-ci; et.

(c) le recyclage du catalyseur régénéré produit dans l'étape (b) dans la zone de conversion des hydrocarbures de l'étape (a).

# FIGURE 1

EFFECT OF STEAMING ON ACTIVITY FOR CRACKING ETLGO AT 1 HOUR ON OIL

T = 950°F (510°C)

$P_T$ ~3 ATM (~303 kN/m²)

$P_{H_2O}$ ~2.8 ATM (~283 kN/m²)

$(WHSV)_{OIL}$ = 1.4 $HR^{-1}$

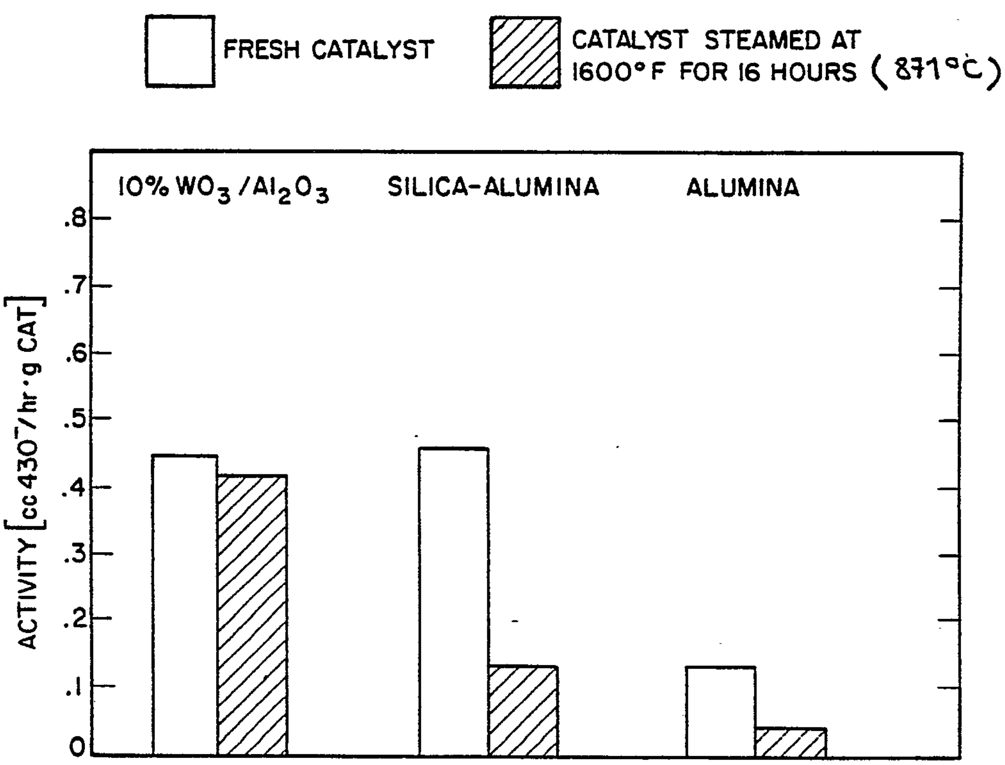

# FIGURE 2

EFFECT OF STEAMING ON ACID SITE DISTRIBUTION FOR $WO_3/Al_2O_3$ AND AMORPHOUS SILICA-ALUMINA

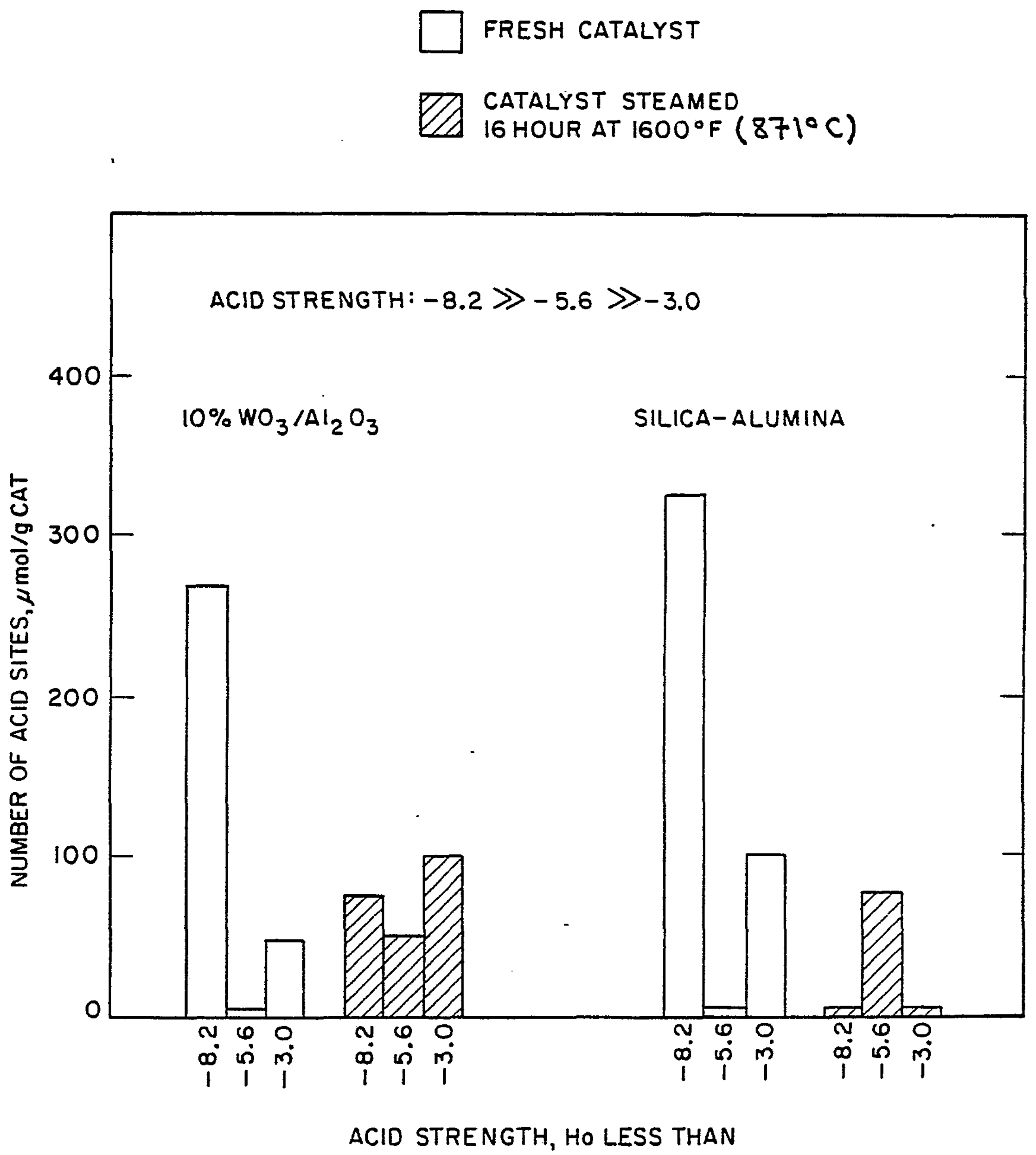

# FIGURE 3

EFFECT OF $WO_3$ CONCENTRATION ON
CAT CRACKING ACTIVITY FOR ETLGO